# EUROPÄISCHE PATENTSCHRIFT

(11) **EP 2 478 175 B1**
(45) Veröffentlichungstag und Bekanntmachung des Hinweises auf die Patenterteilung: **13.08.2014**
(21) Anmeldenummer: 10752321.9
(22) Anmeldetag: 07.09.2010
(51) Int. Cl.: E05C 3/04

(54) **VORRICHTUNG ZUR VERRIEGELUNG EINES DURCH EINEN DECKEL VERSCHLIESSBAREN BEHÄLTNISSES**
DEVICE FOR LOCKING A CONTAINER THAT CAN BE CLOSED BY MEANS OF A LID
DISPOSITIF POUR VERROUILLER UN RÉCIPIENT POUVANT ÊTRE FERMÉ PAR UN COUVERCLE

(30) Priorität: 18.09.2009 DE 102009041803
(43) Veröffentlichungstag der Anmeldung: 25.07.2012
(73) Patentinhaber: Bross, Ewald, 67360 Lingenfeld (DE)
(72) Erfinder: Bross, Ewald, 67360 Lingenfeld (DE)
(74) Vertreter: Kesselhut, Wolf
(86) Internationale Anmeldenummer: PCT/EP2010/005489
(87) Internationale Veröffentlichungsnummer: WO 2011/032655

(56) Entgegenhaltungen:
- DE-A1- 1 428 581
- DE-A1- 3 114 774
- DE-U1- 29 500 443
- GB-A- 315 027
- US-A- 3 039 837
- US-A- 3 217 661
- US-A- 3 250 558

## Beschreibung

Die Erfindung betrifft eine Vorrichtung zur Verriegelung eines durch einen Deckel verschließbaren Behältnisses gemäß dem Oberbegriff von Anspruch 1.

Behältnisse, wie beispielsweise kastenförmige Boxen oder auch zylinderförmige Tonnen, etc., die durch einen daran angeordneten Deckel verschließbar sind, sind aus dem Stand der Technik bekannt und werden dazu eingesetzt, Gegenstände jeglicher Art gegen Schmutz, Wasser und die Einwirkung von mechanischen Stößen und Beschädigung geschützt im Innenraum des Behältnisses aufzunehmen.

Bei den bekannten Behältnissen ergibt sich hierbei das Problem, dass der jeweilige Deckel nach dem Schließen des Behältnisses nicht nur gegen ein unbeabsichtigtes Öffnen verriegelt werden muss, sondern gleichzeitig auch eine ausreichend hohe Anpresskraft bereitgestellt werden muss, die den Deckel gegen den Rand des Behältnisses presst, um sicherzustellen, dass der Rand des Behälters und die jeweilige Dichtfläche des Deckels vollständig an einer in der Regel umlaufenden Dichtung aus eigenelastischem Material, z.B. aus Gummi, anliegen, welche dafür sorgt, dass der Innenraum zuverlässig gegen eindringenden Schmutz und Wasser abgedichtet ist.

Von dem Anmelder werden beispielsweise Behältnisse gefertigt, die eine quaderförmige Form besitzen und z.B. als zusätzliche Aufbewahrungsbehälter an Offroad-Fahrzeugen Verwendung finden. Die Behältnisse umfassen dabei einen Deckel, der verschwenkbar am Behältnis aufgenommen ist, und der mit Hilfe einer Verriegelungsvorrichtung mit einer vorgegebenen Andruckkraft gegen das Behältnis gedrängt werden kann, um mittels einer zwischen dem Rand des Behältnisses und dem Deckel angeordneten eigenelastischen Dichtung eine staub- und flüssigkeitsdichte Abdichtung des Behälterinnenraums zu gewährleisten.

Die Vorrichtung umfaßt hierzu ein am Deckel befestigtes Gehäuse und einen im Gehäuse gelagerten verschwenkbaren Hebel, der an seinem einen Ende mit einem Handgriff zum Verschwenken des Hebels versehen ist. An seinem anderen, der Schwenkachse des Hebels gegenüberliegenden Ende besitzt der Hebel einen hakenartigen Vorsprung, der beim Verschwenken des Hebels aus der Freigabestellung in die Verriegelungsstellung einen am Behältnis angeordneten Vorsprung hintergreift, wodurch der Deckel aufgrund der Hebelwirkung mit einer gegenüber der Betätigungskraft um ein Mehrfaches erhöhten Zugkraft gegen den Rand des Behältnisses gedrängt wird.

Hierdurch wird eine zwischen dem Deckel und dem Behältnisrand angeordnete Dichtung, beispielsweise eine in eine umlaufende Nut des Deckels oder des Behältnisses eingelegte Gummidichtung, zusammengequetscht und dichtet den Innenraum des Behältnisses gegenüber der Außenumgebung ab.

Der verschwenkbare Hebel wird bei der bekannten Vorrichtung in der Verriegelungsstellung durch ein Sperrelement, welches verschiebbar im Gehäuse aufgenommen ist und formschlüssig in den Hebel eingreift, gegen ein unbeabsichtigtes Verschwenken des Hebels in die Freigabestellung gesichert und kann durch ein zusätzliches Schloss, z.B. ein Vorhängeschloss, in dieser Verriegelungsstellung zusätzlich gegen ein Öffnen durch einen unbefugten Dritten verschlossen werden.

Beim Zurückziehen des Sperrelements ergibt sich bei der bekannten Verriegelungsvorrichtung das Problem, dass der Hebel aufgrund der mitunter hohen Gegenkräfte, die durch die Eigenelastizität der in der Verriegelungsstellung zusammen gequetschten Dichtung hervorgerufen werden, schlagartig aus der Verriegelungsstellung in die Freigabestellung verschwenkt, wodurch es leicht zu unangenehmen Verletzungen kommen kann. Die Gefahr von Verletzungen wird in diesem Falle noch dadurch vergrößert, dass der Hebel zusätzlich durch eine Spiralfeder in die Freigabestellung gedrängt wird, um ein vollständiges Verschwenken des Hebels in die Freigabestellung zu gewährleisten, wodurch der Deckel im Anschluss daran ohne eine weitere Betätigung des Hebels geöffnet werden kann.

Aus der US 3,250,558 ist eine Vorrichtung gemäß dem Oberbegriff von Anspruch 1 bekannt.

Aus der GB 315,027 ist eine Tür für ein Kraftfahrzeug bekannt, welche ein Türschloss mit einem handbetätigten Türhebel aufweist, der über eine Steuerkurve mit drei Kurvenabschnitten und einem auf dieser entlang gleitenden elastischen Kurvenfolge in Form einer federelastischen Zunge in insgesamt drei Winkelpositionen arretierbar ist.

Demgemäß ist es eine Aufgabe der vorliegenden Erfindung, eine Vorrichtung zur Verriegelung eines durch einen Deckel verschließbaren Behältnisses zu schaffen, bei welchem die Gefahr von Verletzungen insbesondere beim Öffnen des Behältnisses vermindert ist.

Diese Aufgabe wird erfindungsgemäß durch eine Vorrichtung mit den Merkmalen von Anspruch 1 gelöst.

Weitere Merkmale der Erfindung sind in den Unteransprüchen beschrieben.

Gemäß der Erfindung umfasst eine Vorrichtung zur Verriegelung eines durch einen Deckel verschließbaren Behältnisses, wie beispielsweise einer quader- oder würfelförmigen Metallbox, ein Gehäuse, welches bevorzugt im Bereich der Außenwand des Behältnisses in den Deckel desselben eingelassen ist. Das Gehäuse besitzt bevorzugt eine langgestreckte, im Querschnitt U-förmige Form, mit zwei im Wesentlichen parallel zueinander verlaufenden Seitenteilen, an denen in vorteilhafter Weise jeweils ein im rechten Winkel zu den Seitenteilen verlaufender Montageflansch vorgesehen ist, über welchen das Gehäuse beispielsweise mittels Schrauben oder Nieten am Deckel des Behältnisses befestigt werden kann.

Innerhalb des Gehäuses ist ein Hebel angeordnet, der um eine im Bereich des einen Endes des Gehäuses gelegene Schwenkachse verschwenkbar im Gehäuse gelagert ist, und der an seinem ersten Ende einen Handgriff besitzt, der in einer ersten Verriegelungsstellung bevorzugt an der Oberseite des Deckels durch einen in diesen eingelassenen Längsschlitz aus dem Deckel hervorsteht. An seinem zweiten Ende ist der Hebel mit hakenförmigen Eingriffsmitteln versehen, die bevorzugt nahe der Schwenkachse auf der dem Handgriff gegenüberliegenden Seite des Hebels angeordnet sind. Die hakenförmigen Eingriffsmittel und hintergreifen in der ersten Verriegelungsstellung einen am Behältnis angeordneten Vorsprung, beispielsweise einen Zapfen oder ein am Behältnis angeordnetes vorsprungartiges Formteil, um den Deckel mit einer vorgegebenen Andruckkraft gegen den Rand des Behältnisses zu drängen, wenn der Hebel aus seiner Freigabeposition, in der die hakenförmigen Eingriffsmittel außer Eingriff mit dem Vorsprung sind, in die Verriegelungsstellung verschwenkt wird.

Um den Hebel nach dem Verschwenken in die Verriegelungsstellung in dieser zu fixieren, ist im Gehäuse weiterhin ein bevorzugt verschiebbares Sperrelement angeordnet, welches insbesondere formschlüssig in den Hebel eingreift und diesen in der Verriegelungsstellung arretiert.

Die erfindungsgemäße Vorrichtung zeichnet sich dadurch aus, dass am Hebel eine Steuerkurve mit einem zurückgenommenen Kurvenabschnitt geformt ist, der mit einem Kurvenfolger zusammenwirkt, welcher sich bevorzugt am Gehäuse abstützt und durch federelastische Mittel gegen die Steuerkurve gedrängt wird. Der federbelastete Kurvenfolger erzeugt beim Verschwenken des Hebels aus der Verriegelungsstellung in die Freigabestellung in einer dritten Zwischenstellung einen Haltemoment, welches der Schwenkbewegung entgegen gerichtet ist und den Hebel in der Zwischenstellung arretiert, so dass dieser ohne eine zusätzliche am Handgriff angreifende Betätigungskraft von allein nicht ungehindert aus der Verriegelungsstellung in die Freigabestellung hochschnellen kann, wenn das Sperrelement gelöst wird. Erfindungsgemäß umfasst der Kurvenfolger eine Kurvenrolle, die entlang der Steuerkurve abrollt.

Durch die erfindungsgemäße Vorrichtung ergibt sich der Vorteil, dass der Hebel nach dem Lösen des Sperrelements automatisch lediglich um einen Winkelbetrag von beispielsweise 20 bis 30 Grad aus der Oberseite des Deckels herausschwenkt bevor dieser in der Zwischenstellung arretiert wird. In dem zuvor genannten Winkelbereich wird die Kraft, welche den Hebel aus der Verriegelungsstellung in die Freigabestellung drängt bevorzugt im Wesentlichen allein durch die federelastischen Kräfte der zusammengepressten Dichtung erzeugt. Nach dem automatischen Herausschwenken des Hebels in die Zwischenstellung kann dieser bequem am Handgriff ergriffen und zum vollständigen Entriegeln der Vorrichtung von Hand in die Freigabestellung bewegt werden. Hierbei bewegt sich der federbelastete Kurvenfolger aus dem zurückgenommenen Kurvenabschnitt der Steuerkurve heraus entgegen der den Kurvenfolger beaufschlagenden federelastischen Kräfte in einen radial weiter ausliegenden Bereich der Steuerkurve, was dazu führt, dass der Hebel mit einem der Schwenkbewegung entgegen gerichteten Dehmoment - nachfolgend auch als Haltemoment bezeichnet - beaufschlagt wird, welches einem ungehinderten Hochschnellen des Hebels entgegenwirkt.

Durch die Erfindung ergibt sich weiterhin der Vorteil, dass das Haltemoment in erster Linie durch die erhöhten federelastischen Gegenkräfte erzeugt wird, welche bei der Bewegung des Kurvenfolgers aus dem zurückgenommen Kurvenabschnitt in den radial weiter außen liegenden Kurvenabschnitt der Steuerkurve aufgrund des in diesem Bereich vergleichsweise starken Anstiegs der Kurvenbahn auf diesen wirken. Gegenüber einem Haltemoment, welches allein durch einen Reibschluss zwischen dem Hebel und dem Gehäuse erzeugt wird, ergibt sich hierdurch auch über einen längeren Zeitraum hinweg ein im Wesentlichen konstanter Verlauf und eine konstante Größe des Haltemoments, so dass die erfindungsgemäße Vorrichtung einem wenn überhaupt nur geringen Verschleiß unterliegt.

Ein weiterer Vorteil der erfindungsgemäßen Vorrichtung ist darin zu sehen, dass sich die Größe des der Schwenkbewegung entgegen gerichteten Haltemoments und/oder der Verlauf des Haltemoments über den Schwenkwinkel hinweg durch eine entsprechende Formgebung der Steuerkurve, insbesondere des zurückgenommen Kurvenabschnitts, vergleichsweise einfach variieren lässt, wodurch sich die erfindungsgemäße Vorrichtung unter Beibehaltung der ursprünglichen Bauteile flexibel an unterschiedliche Behältnisgrößen, Dichtungsmaterialien und Bauformen anpassen lässt.

Die Erfindung wird nachfolgend mit Bezug auf die Zeichnungen anhand einer bevorzugten Ausführungsform beschrieben.

In den Zeichnungen zeigen:
- Fig. 1: eine schematische seitliche Querschnittsansicht eines lediglich abschnittsweise dargestellten Behältnisses und des zugehörigen Deckels mit einer daran aufgenommenen erfindungsgemäßen Vorrichtung, bei der sich der Hebel in der Verriegelungsstellung befindet und durch das Sperrelement in dieser fixiert wird,
- Fig. 2: das Behältnis von Fig. 1 nach dem Entriegeln des Sperrelements und dem Herausschwenken des Hebels in die Zwischenposition,
- Fig. 3: das Behältnis von Fig. 1 nach der Weiterbewegung des Hebels in die Freigabestellung und Anheben des Deckels,
- Fig. 4: eine seitliche Querschnittsansicht der erfindungsgemäßen Vorrichtung entlang einer innerhalb des Gehäuses verlaufenden Schnittebene in der Verriegelungsposition,
- Fig. 5: die erfindungsgemäße Vorrichtung von Fig. 4 nach dem Entriegeln des Sperrelements und Verschwenken des Hebels in die Zwischenposition,
- Fig. 6: die erfindungsgemäße Vorrichtung von Fig. 4 nach dem vollständigen Verschwenken des Hebels in die Freigabeposition, und
- Fig. 7: eine Querschnittsansicht des Gehäuses in Höhe der Steuerkurve und des Kurvenfolgers.

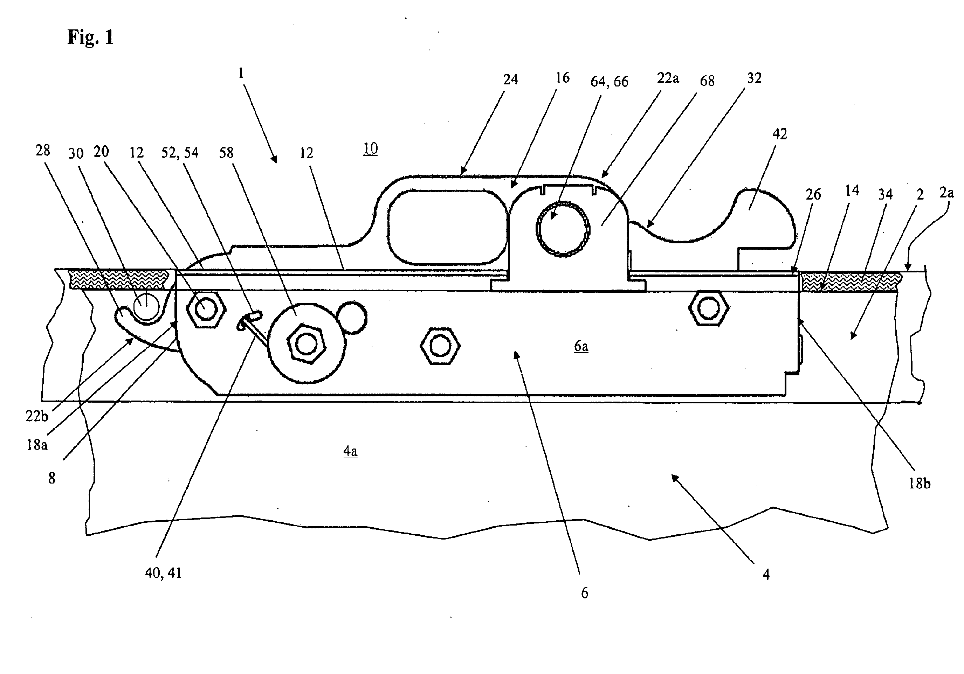

Wie in den Figuren 1 bis 3 gezeigt ist, umfasst eine erfindungsgemäße Vorrichtung 1 zur Verriegelung eines durch einen Deckel 2 verschließbaren Behältnisses 4 ein Gehäuse 6, welches bevorzugt im Bereich der Außenseite 10 des Behältnisses 4 im Bereich von dessen Außenwand 4a in den Deckel 2 eingelassen ist. Das Gehäuse 6, das in den Figuren 1 bis 3 lediglich von außen gezeigt ist, weist bevorzugt zwei im Wesentlichen parallel zueinander verlaufende Seitenteile 6a auf, an denen in vorteilhafter Weise jeweils ein im rechten Winkel zu den Seitenteilen verlaufender Montageflansch 12 geformt ist, über welchen das Gehäuse 6 beispielsweise mittels in den Figuren nicht näher dargestellter Schrauben oder Nieten innerhalb des den oberen Rand 14 des Behältnisses 4 überdeckenden Falzbereichs am Deckel 2 befestigt ist.

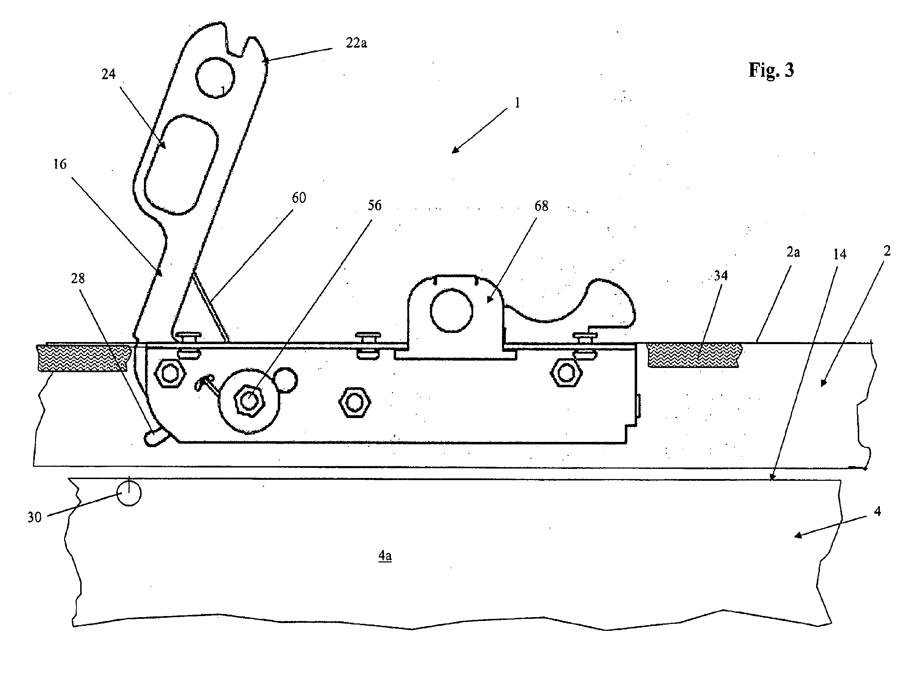

Innerhalb des Gehäuses 6 ist ein Hebel 16 angeordnet, der um eine im Bereich des ersten Endes 18a des Gehäuses 6 gelegene Schwenkachse 20 verschwenkbar im Gehäuse gelagert ist, und der an seinem ersten Ende 22a einen Handgriff 24 besitzt, der in einer ersten, in Fig. 1 gezeigten Verriegelungsstellung durch eine an der Oberseite 2a des Deckels 2 geformte schlitzartige Öffnung 26 zumindest teilweise aus dem Deckel herausragt, wie dies in Fig. 1 angedeutet ist. An seinem zweiten Ende 22b ist der Hebel 16 mit hakenförmigen Eingriffsmitteln 28 versehen, die auf der dem Handgriff 24 gegenüberliegenden Seite jenseits der Schwenkachse 20 nahe derselben angeordnet sind. Wie der Darstellung von Fig. 1 bis 3 hierbei weiterhin im Detail entnommen werden kann, erstrecken sich die hakenförmigen Eingriffsmittel 28 über den Rand 8 des Gehäuses 6 hinaus und hintergreifen in der ersten Verriegelungsstellung einen am Behältnis 4 angeordneten Vorsprung 30, der beispielsweise als ein in den Figuren lediglich schematisch angedeuteter Zapfen ausgestaltet ist, um den Deckel 2 mit einer vorgegebenen Andruckkraft gegen den Rand 14 des Behältnisses 4 zu drängen, wenn der Hebel aus seiner in Fig. 3 gezeigten Freigabeposition, in der die hakenförmigen Eingriffsmittel 28 außer Eingriff mit dem Vorsprung 30 sind, in die Verriegelungsstellung verschwenkt wird. Hierdurch wird eine in den Figuren lediglich schematisch angedeutete Dichtung 34 aus einem gummielastischen Werkstoff, die beispielsweise in eine nicht näher dargestellte umlaufende Nut im Deckel 2 eingelegt ist, zusammengequetscht und dichtet den Innenraum des Behältnisses gegenüber der Außenseite 10 luft- und flüssigkeitsdicht ab.

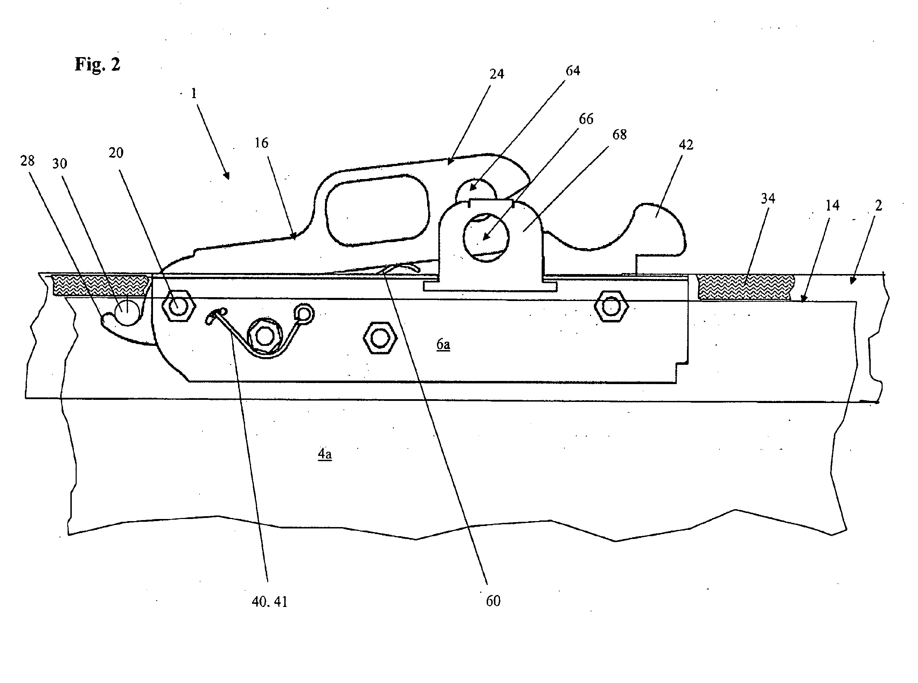

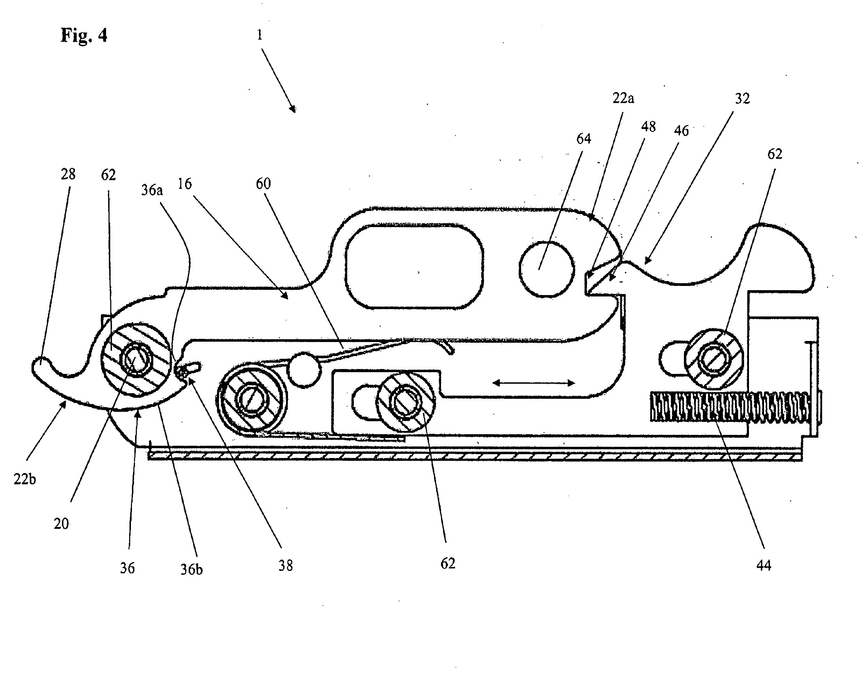

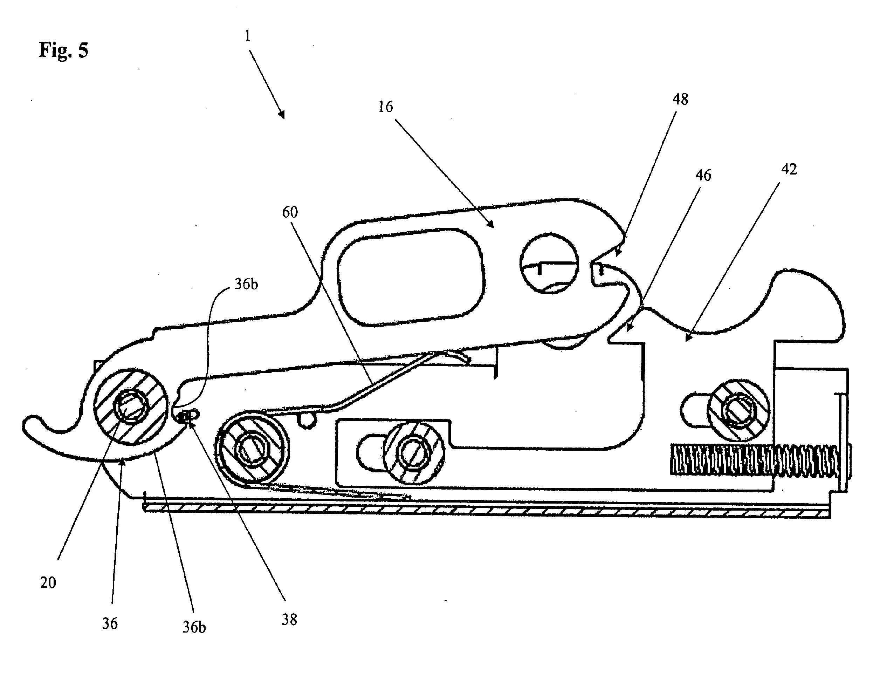

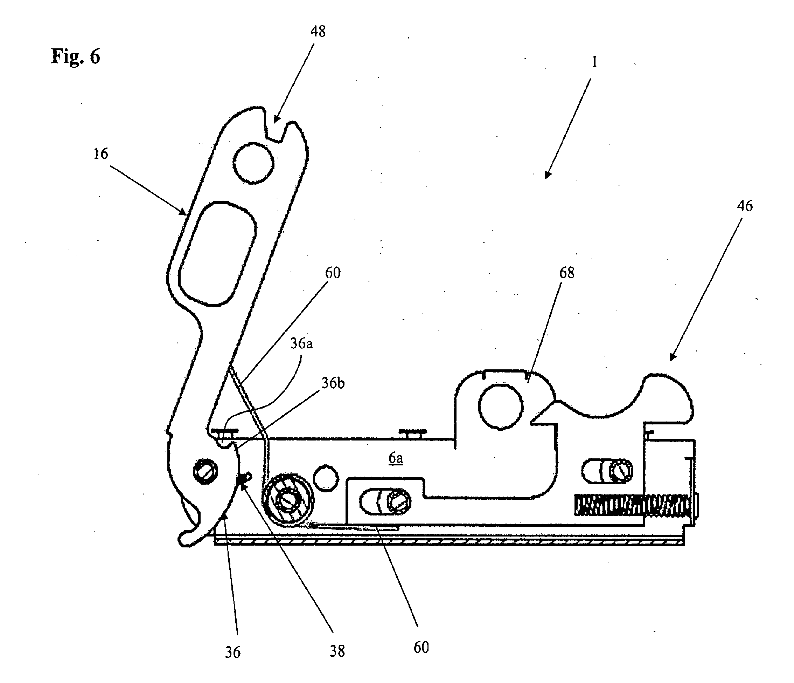

Um den Hebel 16 - der nachfolgend auch als Spannhebel bezeichnet wird - nach dem Verschwenken in die Verriegelungsstellung in dieser zu fixieren, ist bevorzugt im Bereich des zweiten Endes 18b des Gehäuses 6 ein Sperrelement 32 angeordnet, welches insbesondere formschlüssig mit dem ersten Ende 22a des Hebels 16 zusammenwirkt, wie dies nachfolgend im Zusammenhang mit den Figuren 4 bis 6 noch näher beschrieben wird. Wie sich den Darstellungen der Figuren 4 bis 6 entnehmen lässt, ist am Hebel 16 eine Steuerkurve 36 geformt, die einen Kurvenabschnitt 36a aufweist, welcher bezogen auf die Schwenkachse 20 radial zurückgenommen ist, d.h. gegenüber einem weiteren Kurvenabschnitt 36b von der Schwenkachse 20 aus betrachtet radial weiter innen angeordnet ist. Die Steuerkurve 36 wirkt hierbei mit einem Kurvenfolger 38 zusammen, welcher sich bevorzugt am Gehäuse 6 abstützt und durch federelastische Mittel, insbesondere in Form einer Spiralfeder 40, gegen die Außenseite der Steuerkurve 36 gedrängt wird. Der federbelastete Kurvenfolger 38 erzeugt beim Verschwenken des Hebels 16 aus der Verriegelungsstellung in die Freigabestellung in einer dritten, in den Figuren 2 und 5 gezeigten Zwischenstellung des Hebels ein Drehmoment, welches der weiteren Schwenkbewegung des Hebels 16 entgegen gerichtet ist, wodurch dieser in der Zwischenstellung arretiert wird. Hierdurch wird sichergestellt, dass der Hebel 16 ohne eine zusätzliche am Handgriff 24 angreifende Betätigungskraft durch die Vorspannung der zusammen gequetschten Dichtung 34 von allein nicht ungebremst aus der Verriegelungsstellung in die Freigabestellung höchschnellen kann, wenn das Sperrelement 32 gelöst wird.

Wie den Figuren 4 bis 6 weiterhin im Detail entnommen werden kann, umfasst das Sperrelement 32 bei der bevorzugten Ausführungsform der Erfindung einen verschiebbar im Gehäuse zwischen den beiden Gehäuseseitenteilen 6a aufgenommenen Verschluss 42, der durch weitere federelastische Mittel in Form einer Spiraldruckfeder 44 aus einer in den Figuren im Detail nicht gezeigten Freigabestellung, in der das Sperrelement 32 in Fig. 4 von Hand vom ersten Ende 18a des Gehäuses 6 weg nach rechts hin verschoben ist, in die in Fig. 4 gezeigte Sperrstellung gedrängt wird, in der ein Eingriffsabschnitt 46 am Verschluss 42 in einen am ersten Ende des Hebels angeordneten hebelseitigen Eingriffsabschnitt 48 eingreift, um den Hebel 16 formschlüssig in der Verriegelungsstellung zu arretieren. Hierdurch ergibt sich der Vorteil, dass das Sperrelement 32 durch Zurückziehen des Verschlusses 42 mit lediglich einer Hand entriegelt werden kann, um den Hebel 16 freizugeben und das Behältnis 4 zu öffnen.

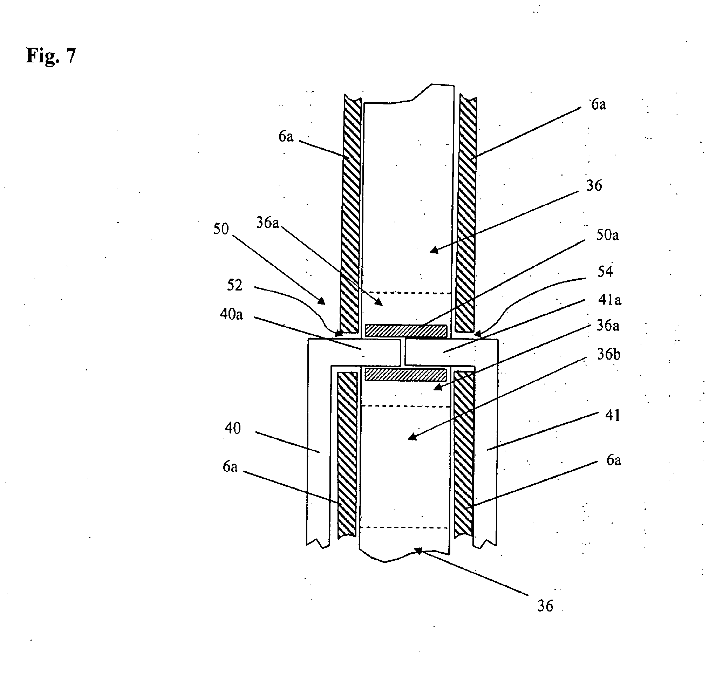

Gemäß der Erfindung umfasst der Kurvenfolger 38 eine Kurvenrolle 50, die entlang der Steuerkurve 36 abrollt. Wie hierbei der Darstellung von Fig. 7 im Detail entnommen werden kann, besitzt die Kurvenrolle 50 hierbei bevorzugt eine auf der Steuerkurve 36 abrollende Hülse 50a, die frei drehbar auf einem sich von außen her durch eine Öffnung 52 in das Gehäuse 6 hinein erstreckenden freien Endabschnitt 40a der Spiralfeder 40 angeordnet ist, die sich mit ihrem anderen Ende am Gehäuse 6 abstützt. Obgleich die Hülse 50 lediglich einseitig auf dem freien Endabschnitt 40a der Spiralfeder 40 angeordnet sein kann, ist auf der der Spiralfeder 40 gegenüberliegenden Seite des Gehäuses 6 bevorzugt eine im Wesentlichen spiegelbildlich zur ersten Spiralfeder 40 ausgebildete weitere Spiralfeder 41 angeordnet ist, deren freier Endabschnitt 41a sich durch eine der ersten Öffnung 52 gegenüberliegende weitere Öffnung 54 in das Gehäuse und in die Hülse 50a hinein erstreckt.

Durch die zuvor beschriebene Konstruktion ergibt sich der Vorteil, dass der Kurvenfolger 38 zum einen nahezu reibungsfrei auf der Steuerkurve 36 abrollt, und zum anderen trotz einer geschützten Anordnung des Kurvenfolgers 38 im Inneren des im Querschnitt bevorzugt U-förmigen Gehäuses die Montage des Kurvenfolgers 38 sehr einfach und zeitsparend durch Einstecken der abgewinkelten Endabschnitte 40a und 41 a der beiden Spiralfedern 40 und 41 von außen her durch die Öffnungen 52 und 54 in die im Gehäuse 6 angeordnete.Hülse 50a erfolgen kann. Nachdem die beiden Endabschnitte 40a und 41 a der Spiralfedern 40 und 41 in die Hülse eingeführt sind, werden die Spiralfedern jeweils durch eine Schraube 56 und eine die jeweilige Spiralfeder 40, 41 überdeckende Scheibe 58 am Gehäuse 6 verklemmt.

Um dem Kurvenfolger 38 bei einem Verschwenken des Hebels 16 eine ungehinderte Bewegung entlang der Steuerkurve 36 zu ermöglichen, sind die seitlichen Öffnung 52 und 54 im Gehäuse bevorzugt als bogenförmige Längsschlitze ausgestaltet, die eine bogenförmige Bewegung der beiden Endabschnitte 40a und 41 a der Spiralfeder 40, 41 sowie auch der Hülse 50a im Gehäuse 6 ermöglichen.

Nach einem weiteren, der Erfindung zugrunde liegenden Gedanken wird der Hebel 16 bevorzugt ebenfalls durch hebelseitige federelastische Mittel, bevorzugt eine innerhalb des Gehäuses 6 angeordnete Spiralfeder 60, die sich am Gehäuse abstützt, in die Freigabestellung gedrängt. Hierdurch ergibt sich der Vorteil, dass der Hebel nach dem Bewegen desselben aus der Zwischenstellung in der Endstellung verbleibt, wodurch sicher gestellt wird, dass die hakenförmigen Eingriffsmittel 28 beim Öffnen und Schließen des Deckels 2 stets außer Eingriff mit dem Vorsprung 30 am Behälter 4 sind und der Deckel 2 frei bewegt werden kann.

Wie weiterhin der Darstellung von Fig. 4 bis 6 entnommen werden kann, sind der Hebel 16 und bevorzugt auch das Sperrelement 32 zur Verminderung der entstehenden Reibung sowie auch zur Vermeidung von Spiel mit Hilfe von Kunststoffscheiben 62 gleitend im Gehäuse 6 gelagert; die jeweils zwischen der Innenwand des jeweiligen Gehäuseseitenteils 6a und dem Hebel 16, bzw. dem Sperrelement 32 angeordnet sind.

Schließlich kann der Hebel 16 im Bereich des Handgriffs 24 eine hebelseitige Durchgangsöffnung 64 aufweisen, die in der Verriegelungsstellung mit einer gehäuseseitigen Durchgangsbohrung 66 korrespondiert, welche in einem am Gehäuse 6 vorgesehen Gehäuseabschnitt 68 geformt ist. Die Durchgangsöffnung 64 und die Durchgangsbohrung 66 dienen dazu, den Hebel 16 in der Verriegelungsstellung insbesondere mittel eines Vorhängeschlosses gegen ein unbefugtes Öffnen zu sichern. Hierbei kann es gemäß der Darstellung von Fig. 1 vorgesehen sein, dass der Gehäuseabschnitt 68, der bevorzugt an jedem der beiden Seitenteile 6a des Gehäuses geformt ist, den Handgriff 24 zumindest teilweise seitlich überdeckt, um Handverletzungen beim Bewegen des Hebels 16 in die Verriegelungsposition entgegenzuwirken.

### Liste der Bezugszeichen

- 1: erfindungsgemäße Vorrichtung
- 2: Deckel
- 2a: Oberseite des Deckels
- 4: Behältnis
- 4a: Außenwand
- 6: Gehäuse
- 6a: Gehäuseseitenteil
- 8: Rand des Gehäuses
- 10: Außenseite
- 12: Montageflansch
- 14: oberer Rand des Behältnisses
- 16: Hebel
- 18a: erstes Ende des Gehäuses
- 18b: zweites Ende des Gehäuses
- 20: Schwenkachse
- 22a: erstes Ende des Hebels
- 22b: zweites Ende des Hebels
- 24: Handgriff
- 26: Öffnung in Deckel
- 28: hakenförmige Eingriffsmittel
- 30: Vorsprung
- 32: Sperrelement
- 34: Dichtung
- 36: Steuerkurve
- 36a: zurückgenommener Abschnitt der Steuerkurve
- 36b: weiterer radial außen liegender Abschnitt der Steuerkurve
- 38: Kurvenfolger
- 40: Spiralfeder
- 40a: freier Endabschnitt
- 41: Spiralfeder
- 41a: freier Endabschnitt
- 42: Verschluss
- 44: weitere federelastische Mittel/Spiraldruckfeder
- 46: verschlussseitiger Eingriffsabschnitt
- 48: hebelseitiger Eingriffsabschnitt
- 50: Kurvenrolle
- 50c: Hülse
- 52: Öffnung
- 54: Öffnung
- 56: Schraube
- 58: Scheibe
- 60: hebelseitige Spiralfeder
- 62: Kunststoffscheibe
- 64: hebelseitige Durchgangsöffnung
- 66: gehäuseseitige Durchgangsöffnung
- 68: Gehäuseabschnitt

## Patentansprüche

1. Vorrichtung (1) zur Verriegelung eines durch einen Deckel (2) verschließbaren Behältnisses (4), mit einem am Deckel (2) aufnehmbaren Gehäuse (6) und einem im Gehäuse (6) verschwenkbar gelagerten Hebel (16), der an seinem ersten Ende (22a) einen Handgriff (24) zum Verschwenken des Hebels (16) aus einer ersten Verriegelungsstellung in eine zweite Freigabestellung aufweist, und der an seinem zweiten Ende (22b) mit hakenförmigen Eingriffsmitteln (28) versehen ist, welche in der ersten Verriegelungsstellung einen behältnisseitigen Vorsprung (30) hintergreifen, um den Deckel (2) mit einer vorgegebenen Andruckkraft gegen das Behältnis (4) zu drängen, wobei ein Sperrelement (32) vorgesehen ist, das den Hebel (16) in der ersten Verriegelungsstellung gegen ein Verschwenken in die zweite Freigabestellung sperrt,
**dadurch gekennzeichnet, dass** am Hebel eine Steuerkurve (36) mit einem zurückgenommenen Kurvenabschnitt (36a) vorgesehen ist, die mit einem sich am Gehäuse (6) abstützenden federbelasteten Kurvenfolger (38) zusammenwirkt, welcher den Hebel (16) nach dem Verschwenken aus der Verriegelungsstellung mit einem der Schwenkbewegung entgegen gerichteten Haltemoment beaufschlagt, um den Hebel (16) in einer zwischen der Verriegelungsstellung und der Freigabestellung gelegenen dritten Zwischenstellung zu arretieren, wobei
der Kurvenfolger (38) eine Kurvenrolle (50) umfasst, die entlang der Steuerkurve (36) abrollt.

2. Vorrichtung nach Anspruch 1,
**dadurch gekennzeichnet,**
**dass** das Sperrelement (32) einen verschiebbar im Gehäuse aufgenommenen Verschluss (42) umfasst, der durch weitere federelastische Mittle (44) aus einer Freigabestellung in eine Sperrstellung gedrängt wird, in der ein verschlusseitiger Eingriffsabschnitt (46) des Sperrelements (32) in einen am ersten Ende (22a) des Hebels (16) angeordneten hebelseitigen Eingriffsabschnitt (48) eingreift, um den Hebel (16) formschlüssig in der Verriegelungsstellung zu arretieren.

3. Vorrichtung nach Anspruch 1,
**dadurch gekennzeichnet,**
**dass** die Kurvenrolle (50) eine auf der Steuerkurve abrollende Hülse (50a) umfasst, die frei drehbar auf einem sich von außen her durch eine Öffnung (52) in das Gehäuse (6) hinein erstreckenden freien Endabschnitt (40a) einer Spiralfeder (40) angeordnet ist, die sich mit ihrem anderen Ende am Gehäuse (6) abstützt.

4. Vorrichtung nach Anspruch 3,
**dadurch gekennzeichnet,**
**dass** die Öffnung (52) als ein insbesondere bogenförmiger Längsschlitz ausgestaltet ist, derart, das sich der freie Endabschnitt (40a) der Spiralfeder (40) bei der Bewegung des Kurvenfolgers (38) entlang der Steuerkurve (36) innerhalb des Längsschlitzes bewegen kann.

5. Vorrichtung nach Anspruch 3 oder 4,
**dadurch gekennzeichnet,**
**dass** auf der der ersten Spiralfeder (40) gegenüberliegenden Seite des Gehäuses (6) eine im Wesentlichen spiegelbildlich zur ersten Spiralfeder (40) ausgebildete weitere Spiralfeder (41) angeordnet ist, deren freier Endabschnitt (41a) sich durch eine der ersten Öffnung (52) gegenüberliegende weitere Öffnung (54) in das Gehäuse (6) und in die Hülse (50a) hinein erstreckt, derart, dass die Hülse auf den beiden Endabschnitten (40a und 41 a) frei drehbar gelagert ist.

6. Vorrichtung nach einem der vorhergehenden Ansprüche,
**dadurch gekennzeichnet,**
**dass** der Hebel (16) durch hebelseitige federelastische Mittel, insbesondere eine weitere, sich am Gehäuse (6) abstützende Spiralfeder (60), in die Freigabestellung gedrängt wird.

7. Vorrichtung nach einem der vorhergehenden Ansprüche,
**dadurch gekennzeichnet,**
**dass** der Hebel (16) und/oder das Sperrelement (32) mit Hilfe von Kunststoffscheiben (62) gleitend im Gehäuse (6) gelagert sind.

8. Vorrichtung nach einem der vorhergehenden Ansprüche,
**dadurch gekennzeichnet,**
**dass** der Hebel (16) im Bereich des Handgriffs (24) eine hebelseitige Durchgangsöffnung (64) aufweist, die in der Verriegelungsstellung mit einer gehäuseseitigen Durchgangsbohrung (66) fluchtet, welche in einem am Gehäuse (6) vorgesehen Gehäuseabschnitt (68) geformt ist.

9. Vorrichtung nach Anspruch 8,
**dadurch gekennzeichnet,**
**dass** der Gehäuseabschnitt (68) den Handgriff zumindest teilweise seitlich überdeckt.

## Claims

1. Device (1) for locking a container (4) that can be closed with a lid (2), comprising a housing (6) that can be accommodated on the lid (2) and a lever (16) that is pivotably mounted in the housing (6), wherein the lever has a handle (24) at its first end (22a) for pivoting the lever (16) from a first locking position to a second release position, and wherein the lever is provided at its second end (22b) with hook-shaped engagement means (28), which engage behind a projection (30) on the container in the first locking position in order to push the lid (2) against the container (4) with a specified pressing force, wherein a blocking element (32) is provided which blocks the lever (16) in the first locking position from pivoting to the second release position,
**characterised in that**
a control cam (36) having a recessed cam section (36a) is provided on the lever, said control cam interacting with a spring-loaded cam follower (38) supported on the housing (6), wherein, after the lever pivots from the locking position, the cam follower (38) acts on the lever (16) with a retaining torque directed opposite the pivoting motion in order to stop the lever (16) in a third intermediate position located between the locking position and the release position, wherein the cam follower (38) comprises a cam roller (50) which rolls over the control cam (36).

2. Device according to claim 1,
**characterised in that**
the locking element (32) comprises a displaceable fastener (42) accommodated in the housing, where said fastener is pressed by a further spring-loaded means (44) from a release position to a locking position in which an engagement section (46) of the blocking element (32) on the fastener engages in an engagement section (48) on the lever and arranged at the first end (22a) of the lever (16) in order to block the lever (16) positively in the locking position.

3. Device according to claim 1,
**characterised in that**
the cam roller (50) comprises a sleeve (50a) rolling along the control cam, wherein said sleeve is arranged to rotate freely on an open end section (40a) of a coil spring (40) extending from outside through an opening (52) into the housing (6), wherein said coil spring is supported at its other end on the housing (6).

4. Device according to claim 3,
**characterised in that**
the opening (52) is formed in the shape of a particularly curved longitudinal slot in such a way that the open end section (40a) of the coil spring (40) can move as the cam follower (38) moves along the control cam (36) inside the longitudinal slot.

5. Device according to claim 3 or 4,
**characterised in that**
a further coil spring (41) formed essentially as a mirror image of the first coil spring (40) is arranged on the side of the housing (6) opposite the first coil spring (40), wherein the open end section (41a) of said further coil spring extends through a further opening (54) located opposite the first opening (54) into the housing (6) and into the sleeve (50a) in such a way that the sleeve is pivoted on both end sections (40a and 41 a) to rotate freely.

6. Device according to one of the preceding claims,
**characterised in that**
the lever (16) is pressed into the release position by elastic means on said lever, in particular a further coil spring (60) supported on the housing (6).

7. Device according to one of the preceding claims,
**characterised in that**
the lever (16) and/or the blocking element (32) are mounted to slide in the housing (6) with the aid of plastic washers (62).

8. Device according to one of the preceding claims,
**characterised in that**
the lever (16) has an access opening (64) in it in the area of the handle (24), wherein said lever opening lines up in the locking position with an access opening (66) in the housing wherein said housing opening is formed in a housing section (68) provided on the housing (6)

9. Device according to claim 8,
**characterised in that**
the housing section (68) covers the handle laterally at least partially.

## Revendications

1. Dispositif (1) pour verrouiller un récipient (4) pouvant être fermé par un couvercle (2), comprenant un boîtier (6) pouvant être reçu sur le couvercle (2) et un levier (16) logé à pivotement dans le boîtier (6) et qui présente à sa première extrémité (22a) une poignée (24) permettant de faire pivoter le levier (16) d'une première position de verrouillage dans une deuxième position de libération et est pourvu à sa deuxième extrémité (22b) de moyens d'engagement (28) en forme de crochet qui s'engagent, dans la première position de verrouillage, derrière une saillie (30) côté récipient pour pousser le couvercle (2) avec une force de pression prédéfinie contre le récipient (4), sachant qu'il est prévu un élément de blocage (32) qui bloque le levier (16) dans la première position de verrouillage contre un pivotement dans la deuxième position de libération,
**caractérisé en ce que**
il est prévu sur le levier une came de commande (36) qui comporte une partie de came (36a) en retrait et coopère avec un suiveur de came (38) sollicité par ressort s'appuyant sur le boîtier (6), qui applique au levier (16), après que celui-ci ait pivoté hors de la position de verrouillage, un couple de maintien dirigé en sens inverse du mouvement de pivotement, pour arrêter le levier (16) dans une troisième position intermédiaire située entre la position de verrouillage et la position de libération, le suiveur de came (38) comprenant un galet de came (50) qui roule le long de la came de commande (36).

2. Dispositif selon la revendication 1,
**caractérisé en ce que**
l'élément de blocage (32) comprend une fermeture (42) reçue de façon coulissante dans le boîtier et qui est poussée par d'autres moyens élastiques à ressort (44) d'une position de libération dans une position de blocage, dans laquelle une portion d'engagement (46) côté fermeture de l'élément de blocage (32) s'engage dans une portion d'engagement (48) côté levier ménagée sur la première extrémité (22a) du levier (16) pour bloquer le levier (16) par complémentarité de forme dans la position de verrouillage.

3. Dispositif selon la revendication 1,
**caractérisé en ce que**
le galet de came (50) comprend une douille (50a) qui roule sur la came de commande et qui est disposée à rotation libre sur une partie d'extrémité libre (40a), s'étendant de l'extérieur à travers une ouverture (52) jusqu'à l'intérieur du boîtier (6), d'un ressort hélicoïdal (40) qui s'appuie avec son autre extrémité sur le boîtier (6).

4. Dispositif selon la revendication 3,
**caractérisé en ce que**
l'ouverture (52) est conformée en particulier en fente longitudinale en forme d'arc, de telle sorte que la partie d'extrémité libre (40a) du ressort hélicoïdal (40) peut se déplacer à l'intérieur de la fente longitudinale lorsque le suiveur de came (38) se déplace le long de la came de commande (36).

5. Dispositif selon la revendication 3 ou 4,
**caractérisé en ce que**
il est prévu, sur le côté opposé au premier ressort hélicoïdal (40) du boîtier (6), un autre ressort hélicoïdal (41) de conformation sensiblement symétrique par rapport au premier ressort hélicoïdal (40) et dont la partie d'extrémité libre (41a) s'étend à travers une autre ouverture (54), opposée à la première ouverture (52), jusqu'à l'intérieur du boîtier (6) et l'intérieur de la douille (50a), de telle sorte que la douille est logée à rotation libre sur les deux parties d'extrémité (40a et 41 a).

6. Dispositif selon l'une des revendications précédentes,
**caractérisé en ce que**
le levier (16) est poussé dans la position de libération par des moyens élastiques à ressort côté levier, en particulier par un autre ressort hélicoïdal (60) s'appuyant sur le boîtier (6).

7. Dispositif selon l'une des revendications précédentes,
**caractérisé en ce que**
le levier (16) et/ou l'élément de blocage (32) sont logés de façon coulissante dans le boîtier (6) à l'aide de rondelles en plastique (62).

8. Dispositif selon l'une des revendications précédentes,
**caractérisé en ce que**
le levier (16) présente dans la région de la poignée (24) un orifice traversant (64) côté levier, qui en position de verrouillage est aligné avec un alésage traversant (66) côté boîtier, formé dans une partie de boîtier (68) prévue sur le boîtier (6).

9. Dispositif selon la revendication 8,
**caractérisé en ce que**
la partie de boîtier (68) recouvre la poignée au moins partiellement sur le côté.
